(19) Europäisches Patentamt
European Patent Office
Office européen des brevets

(11) **EP 2 453 403 A1**

(12) **EUROPEAN PATENT APPLICATION**
published in accordance with Art. 153(4) EPC

(43) Date of publication:
**16.05.2012 Bulletin 2012/20**

(51) Int Cl.:
***G06Q 50/00*** *(2012.01)*

(21) Application number: **09847059.4**

(22) Date of filing: **07.07.2009**

(86) International application number:
**PCT/JP2009/062351**

(87) International publication number:
**WO 2011/004454 (13.01.2011 Gazette 2011/02)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(71) Applicant: **Nippon Steel Corporation
Tokyo 100-8071 (JP)**

(72) Inventors:
• **SHIMOI, Shinichirou
Tokyo 100-8071 (JP)**

• **NAKAMURA, Hideto
Tokyo 100-8071 (JP)**
• **OSHITA, Isao
Tokyo 100-8071 (JP)**

(74) Representative: **Vossius & Partner
Siebertstrasse 4
81675 München (DE)**

(54) **OPERATION SUPPORT DEVICE, OPERATION SUPPORT METHOD, AND PROGRAM**

(57)     An acquisition unit acquires operation process data (including first process data operable by an operator and second process data different from the first process data) of a manufacturing facility from a facility management apparatus. A search unit searches past operation process data similar to current operation process data based on the first or second process data. A search unit searches action data related to the past operation process data searched by the search unit from action data determined by an action determination unit based on the first process data. An evaluation unit uses the second process data to evaluate the action data searched by the search unit. As a result, the operator can determine what kind of an operation related to an operation of the manufacturing facility should be performed in the future.

FIG. 3

**Description**

TECHNICAL FIELD

The present invention relates to an operation supporting apparatus that supports an operation of a manufacturing facility that manufactures a product, an operation supporting method, and a program product for causing a computer to execute the operation supporting method.

BACKGROUND ART

For example, in manufacturing and the like of the steel industry and the like, a manufacturing process and the like is becoming more sophisticated than in the past, and the content of operation of an operator who performs an operation by operating and managing a manufacturing facility including various equipment instruments and the like that constitute a manufacturing process is becoming complicated and sophisticated. Meanwhile, operators who engage in the operation often include not only skilled operations, but also unskilled operators.

Conventionally, in a method of supporting an operation worker, such as an operator, in the operation of a manufacturing facility, past operation case data in the manufacturing facility is guided (for example, see Patent Literature 1 and Patent Literature 2 below).

Specifically, Patent Literature 1 below discloses a technique of an operation supporting method of a coke plant, in which operation cases are classified into categories, and operation patterns of similar operations are guided. Patent Literature 2 below discloses a technique of automatically storing cases of operation patterns as a technique related to a plant operation supporting apparatus that performs alarm prediction, tendency prediction of process data, and operation guidance in a system using an information device, such as a computer, used in a plant or the like.

CITATION LIST

PATENT LITERATURE

Patent Literature 1: Japanese Laid-open Patent Publication No. 7-216359
Patent Literature 2: Japanese Laid-open Patent Publication No. 2002-323923
Patent Literature 3: Japanese Laid-open Patent Publication No. 2005-135010

SUMMARY OF THE INVENTION

TECHNICAL PROBLEM

However, in the conventional techniques, whether the operator has performed the operations or automatic control operations are performed is unclear in the past operation cases. Therefore, there is a problem that it is difficult for the operator to determine what kind of operation should be performed in the future. The problem is particularly prominent when the operator is less experienced.

The present invention has been made in view of the problem, and an object of the present invention is to provide a technique for supporting an operator to easily and appropriately determine what kind of operation of an equipment instrument and the like related to an operation of a manufacturing facility should be performed in the future based on a performance value and the like of process data in the operation related to the equipment instrument.

SOLUTION TO PROBLEM

The present invention provides an operation supporting apparatus that supports an operation of a manufacturing facility that manufactures a product, the operation supporting apparatus including: operation process data acquisition means for acquiring operation process data that is process data related to the operation of the manufacturing facility and that includes first process data as a performance value which is set based on an operation by an operator in the manufacturing facility and second process data including data related to a quality of the product or a quality of the operation; operation process data storage means for storing past operation process data in past operations of the manufacturing facility that is stored in the past and current operation process data in a current operation of the manufacturing facility, the past operation process data and the current operation process data being the operation process data acquired by the operation process data acquisition means; similar operation search means for searching past operation process data similar to the current operation process data from the past operation process data based on the first process data or the second process data in the current operation process data; action determination means for determining whether there is an action of an operation by the operator in the operation in the first process data based on the first process data; action data storage means for storing action data related to the action determined by the action determination means; action past operation search means for searching the action data related to the past operation process data searched by the similar operation search means from the action data stored in the action data storage means; and evaluation means for evaluating the action data searched by the action past operation search means using the second process data.

The present invention provides an operation supporting method by an operation supporting apparatus that supports an operation of a manufacturing facility that manufactures a product, the operation supporting method including: an operation process data acquisition step of acquiring operation process data that is process data related to the operation of the manufacturing facility and that includes first process data as a performance value which is set based on an operation by an operator in the manufacturing facility and second process data including data related to a quality of the product or a quality of the operation; an operation process data storage step of storing, in operation process data storage means of the operation supporting apparatus, past operation process data in past operations of the manufacturing facility that is stored in the past and current operation process data in a current operation of the manufacturing facility, the past operation process data and the current operation process data being the operation process data acquired in the operation process data acquisition step; a similar operation search step of searching past operation process data similar to the current operation process data from the past operation process data based on the first process data or the second process data in the current operation process data; an action determination step of determining whether there is an action of an operation by the operator in the operation in the first process data based on the first process data; an action data storage step of storing, in action data storage means of the operation supporting apparatus, action data related to the action determined in the action determination step; an action past operation search step of searching the action data related to the past operation process data searched in the similar operation search step from the action data stored in the action data storage means; and an evaluation step of evaluating the action data searched in the action past operation search step using the second process data.

The present invention provides a program product for causing a computer to execute an operation supporting method by an operation supporting apparatus that supports an operation of a manufacturing facility that manufactures a product, the program product causing the computer to execute: an operation process data acquisition step of acquiring operation process data that is process data related to the operation of the manufacturing facility and that includes first process data as a performance value which is set based on an operation by an operator in the manufacturing facility and second process data including data related to a quality of the product or a quality of the operation; an operation process data storage step of storing, in operation process data storage means of the operation supporting apparatus, past operation process data in past operations of the manufacturing facility that is stored in the past and current operation process data in a current operation of the manufacturing facility, the past operation process data and the current operation process data being the operation process data acquired in the operation process data acquisition step; a similar operation search step of searching past operation process data similar to the current operation process data from the past operation process data based on the first process data or the second process data in the current operation process data; an action determination step of determining whether there is an action of an operation by the operator in the operation in the first process data based on the first process data; an action data storage step of storing, in action data storage means of the operation supporting apparatus, action data related to the action determined in the action determination step; an action past operation search step of searching the action data related to the past operation process data searched in the similar operation search step from the action data stored in the action data storage means; and an evaluation step of evaluating the action data searched in the action past operation search step using the second process data.

ADVANTAGEOUS EFFECTS OF INVENTION

The present invention can provide a technique for supporting an operator to easily and appropriately determine what kind of operation related to an operation of a manufacturing facility should be performed in the future. As a result, for example, the present invention is expected to contribute to allow even an unskilled operator to properly handle the situation when there is a problem in the operation.

BRIEF DESCRIPTION OF DRAWINGS

Fig. 1 is a schematic diagram showing an example of a schematic configuration of an operation supporting system according to an embodiment of the present invention.

Fig. 2 is a schematic diagram showing an example of a hardware configuration inside an operation supporting apparatus according to the embodiment of the present invention.

Fig. 3 is a schematic diagram showing an example of a functional configuration related to a process of the operation supporting apparatus according to the embodiment of the present invention.

Fig. 4 is a schematic diagram showing an example of manufacturing condition data stored in a manufacturing condition data storage area shown in Fig. 3.

Fig. 5 is a schematic diagram showing an example of a similar operation determination table stored in a similar operation determination table storage area shown in Fig. 3.

Fig. 6A is a schematic diagram showing an example of past operation process data stored in an operation process data storage area shown in Fig. 3.

Fig. 6B is a schematic diagram showing an example of current operation process data stored in the operation process data storage area shown in Fig. 3.

Fig. 7A is a schematic diagram showing an example of an image related to a process of the operation supporting apparatus according to the embodiment of the present invention.

Fig. 7B is a schematic diagram showing an example of an image related to a process of the operation supporting apparatus according to the embodiment of the present invention.

Fig. 7C is a schematic diagram showing an example of an image related to a process of the operation supporting apparatus according to the embodiment of the present invention.

Fig. 8A is a schematic diagram showing an example of an action determination table stored in an action determination table storage area shown in Fig. 3.

Fig. 8B is a schematic diagram showing an image of a process using the action determination table shown in Fig. 8A.

Fig. 9 is a schematic diagram showing an example of action data stored in an action data storage area shown in Fig. 3.

Fig. 10 is a schematic diagram showing an example of an action search period definition table stored in an action search period definition table storage area shown in Fig. 3.

Fig. 11A is a schematic diagram showing an example of an action evaluation logic table included in an action evaluation table stored in an action evaluation table storage area shown in Fig. 3.

Fig. 11B is a schematic diagram showing an example of an action evaluation weighting table included in the action evaluation table stored in the action evaluation table storage area shown in Fig. 3.

Fig. 11C is a schematic diagram showing an example of an action overall evaluation determination table included in the action evaluation table stored in the action evaluation table storage area shown in Fig. 3.

Fig. 12 is a schematic diagram showing an example of a display screen displayed on a CRT display device shown in Fig. 1.

Fig. 13 is a flow chart showing an example of a processing procedure of an operation supporting method executed by the operation supporting apparatus according to the embodiment of the present invention.

## DESCRIPTION OF EMBODIMENTS

Hereinafter, a mode (embodiment) for carrying out the present invention will be described with reference to the attached drawings.

The description of the embodiment of the present invention shown below illustrates an example of applying an operation supporting apparatus and the like of the present invention when steel plates in a plurality of specifications are continuously manufactured in a rolling line of the steel industry. In the following description, an operation of rolling (processing) the steel plates as materials to be rolled will also be written as a "lot of steel plates", or simply as an "operation" or "lot". A name "operation ID" is provided to each lot.

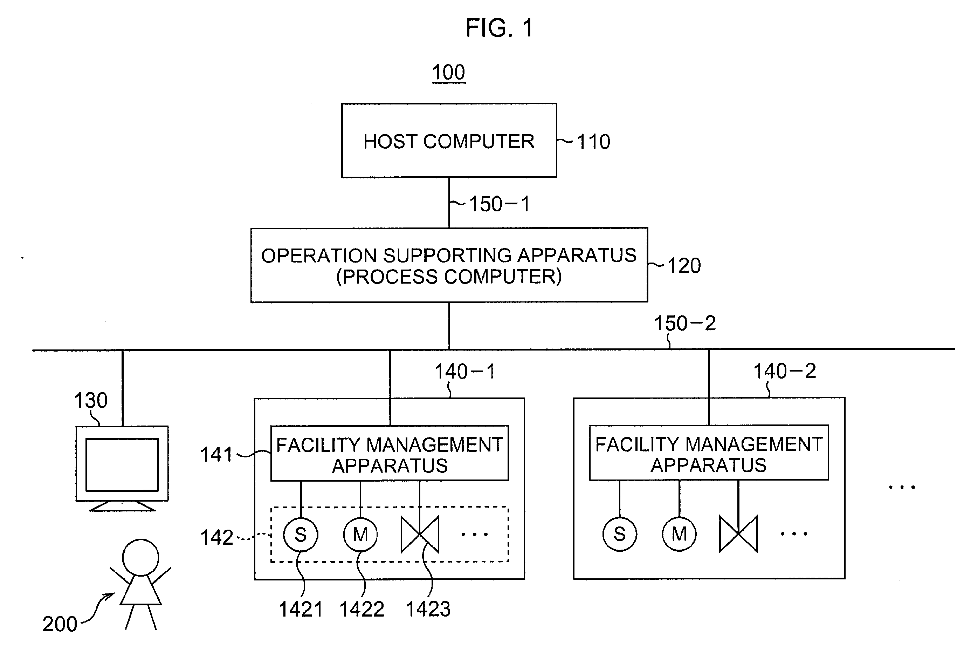

Fig. 1 is a schematic diagram showing an example of a schematic configuration of an operation supporting system according to the embodiment of the present invention.

As shown in Fig. 1, an operation supporting system 100 includes a host computer 110, an operation supporting apparatus 120, a CRT display device 130, manufacturing facilities 140 (140-1, 140-2, ...), and networks 150 (150-1, 150-2).

The host computer 110 comprehensively controls the operation in the operation supporting system 100 and communicates with the operation supporting apparatus 120 via the network 150-1 as necessary.

The operation supporting apparatus 120 is an apparatus that supports the operation of the manufacturing facility 140 that manufactures steel plates (products) and is constituted by, for example, a process computer. The operation supporting apparatus 120 communicates with the host computer 110 via the network 150-1 and communicates with the CRT display device 130 and a facility management apparatus 141 via the network 150-2 as necessary.

The CRT display device 130, provided for example in a manufacturing line of a plant, communicates with the operation supporting apparatus 120 and the facility management apparatus 141 of the manufacturing facility 140 via the network 150-2 as necessary to display various information and data. The CRT display device 130 is configured to allow an operator 200 to perform an operation input and the like.

The manufacturing facility 140 is arranged in each manufacturing process of the manufacturing line, and the operation is performed under the management of the operator 200. The manufacturing facility 140 includes the facility management apparatus 141 and a facility adjustment apparatus 142.

The facility management apparatus 141 manages the entire manufacturing facility 140 and is capable of communicating with the operation supporting apparatus 120 and the CRT display device 130 via the network 150-2. The facility adjustment apparatus 142 includes, for example, a sensor 1421, a motor 1422, and a valve 1423, and has a function of adjusting an operation process of the manufacturing facility 140. The manufacturing facility 140 can automatically adjust the facility adjustment apparatus 142 when the operator 200 inputs an instruction to the facility management apparatus 141, and the operator 200 can also directly operate the facility adjustment apparatus 142 to manually adjust the facility adjustment apparatus 142. Specifically, for example, a PLC (Programmable Logic Controller) can be applied as the facility management apparatus 141 in a rolling line. In the rolling line, for example, a load cell as a rolling force sensor or a rotation detection sensor of a motor 1422 can be applied as a sensor 1421, a rotation motor of a roll can be applied as the motor 1422, and a hydraulic valve can be applied as a valve 1423 in the facility adjustment apparatus 142.

The network 150-1 connects the host computer 110 and the operation supporting apparatus 120 to allow communication, and the network 150-2 mutually connects the operation supporting apparatus 120, the CRT display device 130, and the facility management apparatus 141 to allow communication.

A hardware configuration inside the operation supporting apparatus 120 will be described.

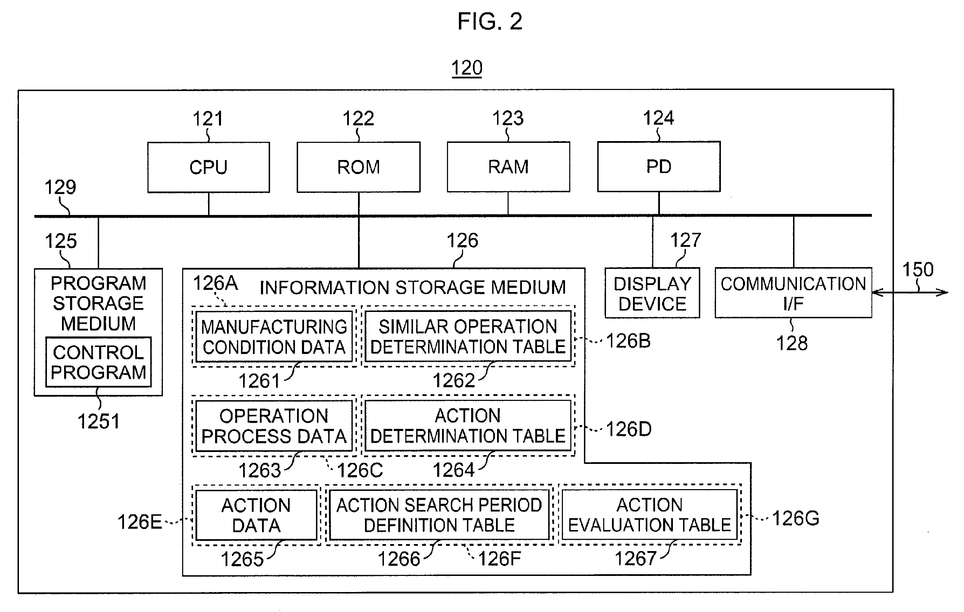

Fig. 2 is a schematic diagram showing an example of the hardware configuration inside the operation supporting apparatus 120 according to the embodiment of the present invention.

As shown in Fig. 2, the operation supporting apparatus 120 includes a CPU 121, a ROM 122, a RAM 123, a pointing device (PD) 124, a program storage medium 125, an information storage medium 126, a display device 127, a communication interface (communication I/F) 128, and a bus 129.

The CPU 121 comprehensively controls the operation in the operation supporting apparatus 120 and controls the components (122 to 128) of the operation supporting apparatus 120 via the bus 129.

The ROM 122 stores a BIOS (Basic Input/Output System), an operating system program (OS), and the like related to the operation of the CPU 121.

The RAM 123 functions as a main memory, a work area, and the like of the CPU 121. The CPU 121 loads, to the RAM 123, a necessary program and the like from the ROM 122 or the program storage medium 125 described below, necessary information from the information storage medium 126 described below, and the like upon the execution of the process. The execution of the program, the process of the information, and the like realizes various operations.

The PD 124 includes, for example, a mouse and a keyboard, and is operation input means for the operator 200 to input an operation to the operation supporting apparatus 120 as necessary.

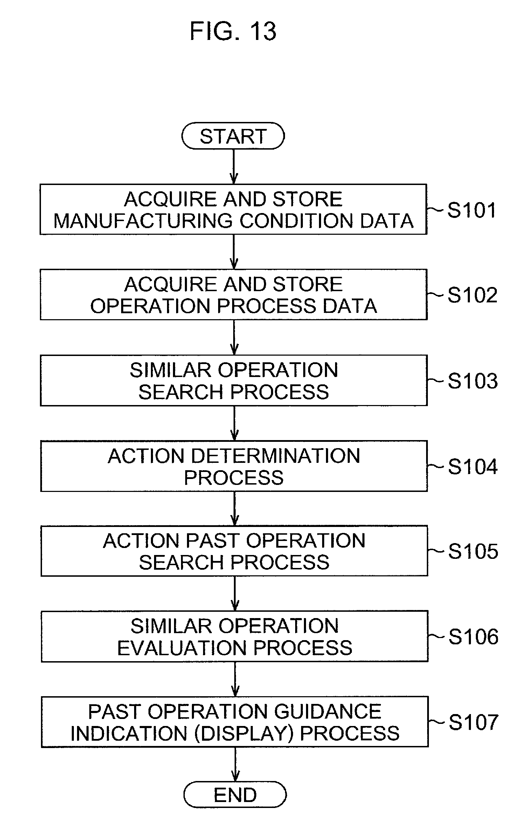

The program storage medium 125 is a storage medium that stores various programs including a control program 1251. The control program 1251 is a program used by the CPU 121 to execute a process of Fig. 13 described later.

The information storage medium 126 is a storage medium that stores a variety of information (such as data) necessary for the CPU 121 to execute processes and a variety of information (such as data) obtained by the processes by the CPU 121. Storage areas for storing the variety of information (such as data) are arranged inside the information storage medium 126.

Specifically, the information storage medium 126 of the present embodiment includes a manufacturing condition data storage area 126A that stores manufacturing condition data 1261, a similar operation determination table storage area 126B that stores a similar operation determination table 1262, an operation process data storage area 126C that stores operation process data 1263, an action determination table storage area 126D that stores an action determination table 1264, an action data storage area 126E that stores action data 1265, an action search period definition table storage area 126F that stores an action search period definition table 1266, and an action evaluation table storage area 126G that stores an action evaluation table 1267. A variety of information (such as data) stored in the information storage medium 126 will be described later.

The display device 127 is display means for displaying a variety of information, menu images, and the like based on the control of the CPU 121.

The communication I/F 128 communicates with an external apparatus via the networks 150 (150-1, 150-2) based on the control of the CPU 121.

The bus 129 is a bus for mutually connecting the CPU 121, the ROM 122, the RAM 123, the PD 124, the program storage medium 125, the information storage medium 126, the display device 127, and the communication I/F 128 to allow communication.

The host computer 110, the CRT display device 130, and the facility management apparatus 141 shown in Fig. 1 also have the hardware configuration shown in Fig. 2. In this case, the information storage media 126 of the apparatuses do not store the variety of information (1261 to 1266) shown in Fig. 2. Furthermore, for example, the CRT display devices 130 and the facility management apparatuses 141 may further include speakers for informing the operator 200 of the manufacturing status by sound.

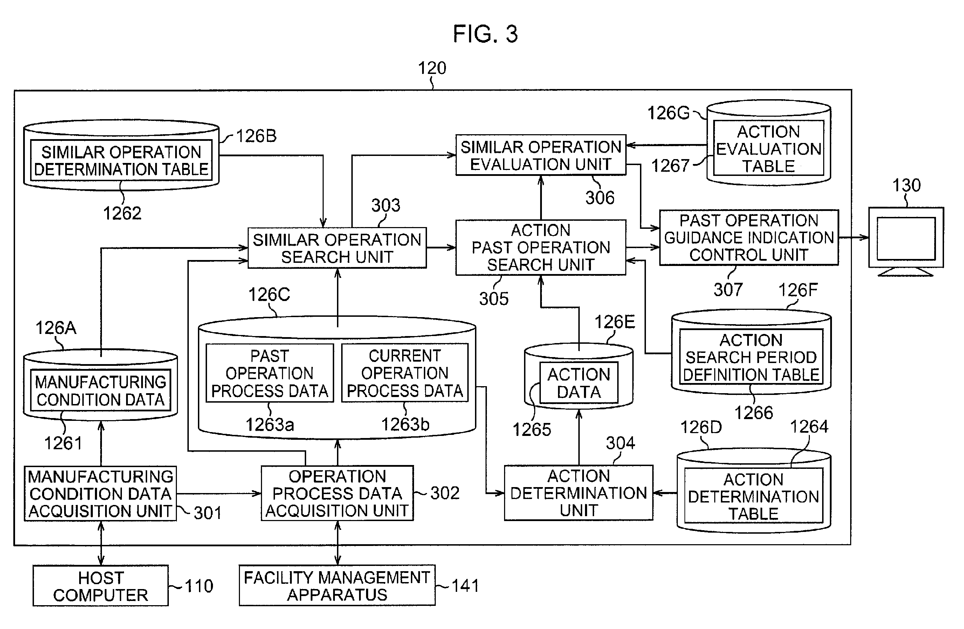

A functional configuration related to a process of the operation supporting apparatus 120 will be described. Fig. 3 is a schematic diagram showing an example of the functional configuration related to the process of the operation supporting apparatus 120 according to the embodiment of the present invention.

In the present embodiment, for example, a manufacturing condition data acquisition unit 301, an operation process data acquisition unit 302, a similar operation search unit 303, an action determination unit 304, an action past operation search unit 305, a similar operation evaluation unit 306, and a past operation guidance indication control unit 307 shown in Fig. 3 are constituted from the CPU 121 and the control program 1251 recorded in the program storage medium 125 shown in Fig. 2. Fig. 3 shows the various storage areas (126A to 126F) constituted inside the information storage medium 126 shown in Fig. 2.

In the following description, an example when the manufacturing facility 140 executes a rolling process of steel plates as described above will be described.

The manufacturing condition data acquisition unit 301 acquires the manufacturing condition data 1261 related to manufacturing conditions of the manufacturing facility 140 from the host computer 110. The manufacturing condition data acquisition unit 301 stores the acquired manufacturing condition data 1261 in the manufacturing condition data storage area 126A of the information storage medium 126 in association with identification information for identifying the operation in the manufacturing facility 140.

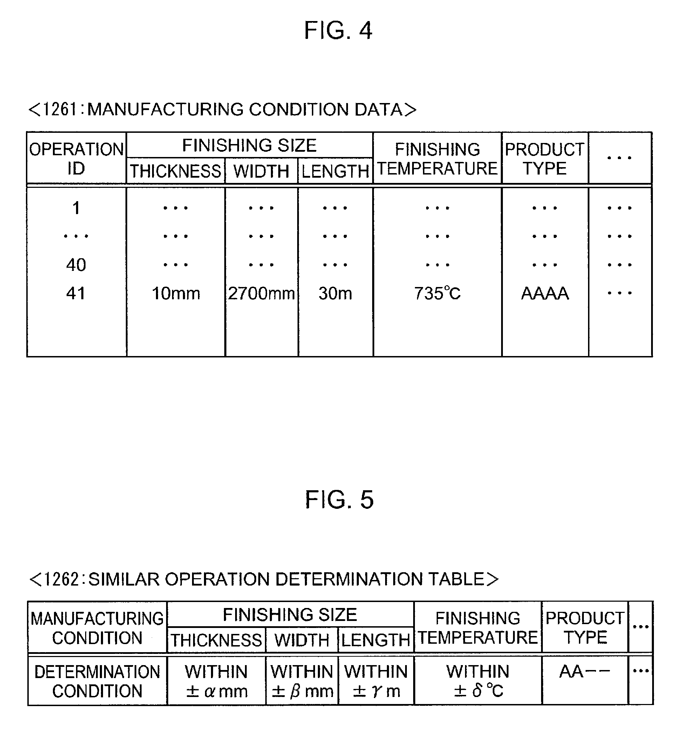

Fig. 4 is a schematic diagram showing an example of the manufacturing condition data 1261 stored in the manufacturing condition data storage area 126A shown in Fig. 3.

In the example shown in Fig. 4, various data including a finishing size of steel plate (thickness, width, and length), a finishing temperature of steel plate, and a product type of steel plate are stored as the manufacturing condition data 1261 in association with an operation ID as identification information for identifying the operation (i.e. the lot of steel plate) in the manufacturing facility 140. As shown in Fig. 4, the manufacturing condition data storage area 126A stores past manufacturing condition data (manufacturing condition data of operation IDs 1 to 40) and current manufacturing condition data (manufacturing condition data of operation ID 41) in the manufacturing facility 140. Specifically, in the example shown in Fig. 4, the finishing size of the thickness of the steel plate 10 mm, the finishing size of the width of the steel plate 2700 mm, the finishing size of the length of the steel plate 30 m, the finishing temperature of the steel plate 735 °C, the product type (such as the hardness) of the steel plate AAAA, ... are illustrated as the current manufacturing condition data of the operation ID 41.

Fig. 5 is a schematic diagram showing an example of the similar operation determination table 1262 stored in the similar operation determination table storage area 126B shown in Fig. 3. The similar operation determination table 1262 shows a determination condition as a standard for determining an operation similar to the operations in the manufacturing condition data 1261 shown in Fig. 4. More specifically, in the example shown in Fig. 5, the similar operation determination table 1262 shows a determination condition for determining that an operation is similar to the operations in manufacturing condition data when the finishing size of the thickness of the steel plate is within $\pm\alpha$ mm, the finishing size of the width of the steel plate is within $\pm\beta$ mm, the finishing size of the length of the steel plate is within $\pm y$ m, the finishing temperature of the steel plate is within $\pm\delta$ °C, the production type (hardness) of the steel plate is AA-- (- is arbitrary), and so forth in the manufacturing condition data. Although there is only one determination condition in the example shown in Fig. 5 for the simplification of the description, a plurality of determination conditions may be set, and one of the determination conditions may be selected.

Fig. 3 will be described again.

The operation process data acquisition unit 302 acquires the process data (operation process data 1263) related to the operation of the manufacturing facility 140 from the facility management apparatus 141 of the manufacturing facility 140 during or before and after rolling of the steel plates of each lot. In this case, the operation process data acquisition unit 302 obtains the operation ID of the operation process data from the manufacturing condition data acquisition unit 301 and inputs and acquires the operation process data 1263 in association with the operation ID. In this case, the operation ID is associated with the manufacturing condition data 1261 as shown in Fig. 4. As a result, the operation process data acquisition unit 302 can acquire the operation process data 1263 in association with the manufacturing condition data 1261. The operation process data acquisition unit 302 associates the operation process data 1263 acquired from the facility management apparatus 141 with the operation ID obtained from the manufacturing condition data acquisition unit 301 and stores the data in the operation process data storage area 126C of the information storage medium 126.

The operation process data 1263 acquired by the operation process data acquisition unit 302 is divided into past operation process data 1263a of the past operations of the manufacturing facility 140 and current operation process data 1263b of the current operation (in operation) of the manufacturing facility 140 and is stored in the operation process data storage area 126C. The current operation process data 1263b is sequentially stored to form the past operation process data 1263a.

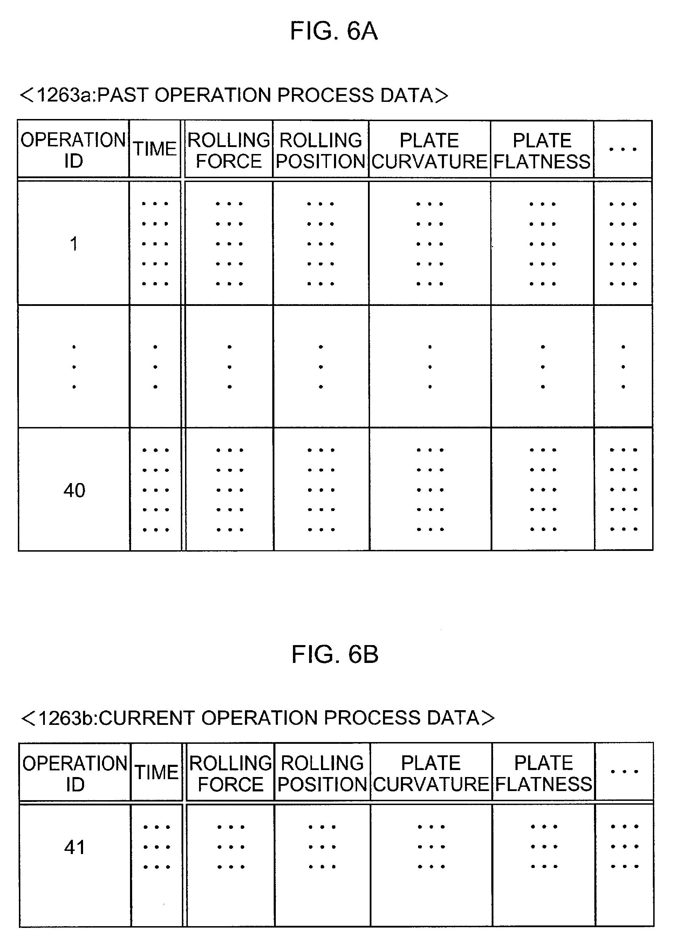

Fig. 6A is a schematic diagram showing an example of the past operation process data 1263a stored in the operation process data storage area 126C shown in Fig. 3. Fig. 6B is a schematic diagram showing an example of the current operation process data 1263b stored in the operation process data storage area 126C shown in Fig. 3.

In the present embodiment, a piece of operation process data acquired by the operation process data acquisition unit 302 from the facility management apparatus 141 for each rolling of the steel plate, i.e. each operation (lot), includes similar operation search target process data to be searched by the similar operation search unit 303 described later, operable process data that can be operated by the operator 200 (that can be set by the operator 200 as a manipulator) in the manufacturing facility 140 through the facility adjustment apparatus 142, and evaluation target process data used to evaluate action data described later based on the operable process data. More specifically, the operation process data acquisition unit 302 acquires, as a piece of operation process data, process data including the operable process data equivalent to first process data as well as the similar operation search target process data and the evaluation target process data equivalent to second process data that is different from the operable process data. Specifically, in the example shown in Figs. 6A and 6B, data of "ROLLING FORCE" of the steel plate is equivalent to the similar operation search target process data, data of "ROLLING POSITION" of the steel plate is equivalent to the operable process data, and data of "PLATE CURVATURE" and "PLATE FLATNESS" of the steel plate is equivalent to the evaluation target process data. Although one piece of data is illustrated as the similarity operation search target process data and the operable process data in the example shown in Figs. 6A and 6B, a plurality of data can be applied in the present embodiment.

In the present embodiment, for example, the following data can be applied as the similar operation search target process data, the operable process data, and the evaluation target process data.

Specifically, data including at least one of a measurement value by the sensor 1421 arranged on the manufacturing facility 140 and a performance value related to the state of the manufacturing facility 140 can be applied as the similar operation search target process data.

Data of a performance value which is set based on the operation by the operator 200 in the manufacturing facility 140 can be applied as the operable process data.

Data related to the quality of the product (quality such as a property of the rolled steel plate) or the quality of the operation can be applied as the evaluation target process data.

Fig. 6A shows a plurality of the past operation process data 1263a corresponding to the past manufacturing condition data of the operation IDs 1 to 40 shown in Fig. 4 along with the time information. More specifically, the past operation process data 1263a is stored in the operation process data storage area 126C in association with the past manufacturing condition data (manufacturing condition data of the operation IDs 1 to 40) stored in the manufacturing condition data storage area 126A based on the operation IDs.

Fig. 6B shows a plurality of the current operation process data 1263b corresponding to the current manufacturing condition data related to the current operation of the operation ID 41 shown in Fig. 4 (i.e. steel plate in process) along with the time information (i.e. current time information). More specifically, the operation process data storage area 126C stores the current operation process data 1263b in association with the current manufacturing condition data (manufacturing condition data of the operation ID 41) stored in the manufacturing condition data storage area 126A based on the operation ID.

In this case, when the next operation ID (operation ID 42) is sequentially obtained from the manufacturing condition data acquisition unit 301, the operation process data acquisition unit 302 sequentially executes a process of storing the operation process data of the operation ID 41 after the operation process data of the operation ID 40 as the past operation process data 1263a shown in Fig. 6A and a process of storing the operation process data of the operation ID 42 as the current operation process data 1263b shown in Fig. 6B.

Based on the similar operation search target process data of the current operation process data 1263b, the similar operation search unit 303 executes a process of searching the past operation process data 1263a similar to the current operation process data 1263b from the past operation process data 1263a. Although the similar past operation process data 1263a is searched based on the similar operation search target process data (data of "ROLLING FORCE" in the present example) in the present embodiment, the present invention is not limited to this. For example, the present invention includes a mode in which the similar operation search unit 303 searches the similar past operation process data 1263a based on the operable process data (data of "ROLLING POSITION" in the present example) or based on the evaluation target process data (data of "PLATE CURVATURE" and "PLATE FLATNESS" in the present example).

Hereinafter, details of the search process by the similar operation search unit 303 of the present embodiment will be described.

Specifically, the similar operation search unit 303 first uses the similar operation determination table 1262 shown in Fig. 5 to search the past manufacturing condition data similar to the current manufacturing condition data (manufacturing condition data of the operation ID 41 shown in Fig. 4) in the current operation process data 1263b from the past manufacturing condition data (manufacturing condition data of the operation IDs 1 to 40 shown in Fig. 4) stored in the manufacturing condition data storage area 126A to narrow down the search range. More specifically, the similar operation search unit 303 searches the data that satisfies the determination condition defined in the similar operation determination table 1262 shown in Fig. 5 relative to the current manufacturing condition data of the operation ID 41 shown in Fig. 4 from the past manufacturing condition data of the operation IDs 1 to 40 shown in Fig. 4 and acquires the operation ID of the searched past manufacturing condition data. The similar operation search unit 303 uses the acquired operation ID to narrow down the search range of the past operation process data 1263a shown in Fig. 6A.

Subsequently, the similar operation search unit 303 sets the narrowed past operation process data 1263a as a search range to execute a process of searching the past operation process data 1263a similar to the current operation process data 1263b based on the data of "ROLLING FORCE" as the similar operation search target process data. Various methods are conventionally proposed as a search method using the similar operation search target process data by the similar operation search unit 303, and for example, the method shown in Patent Literature 3 can be applied.

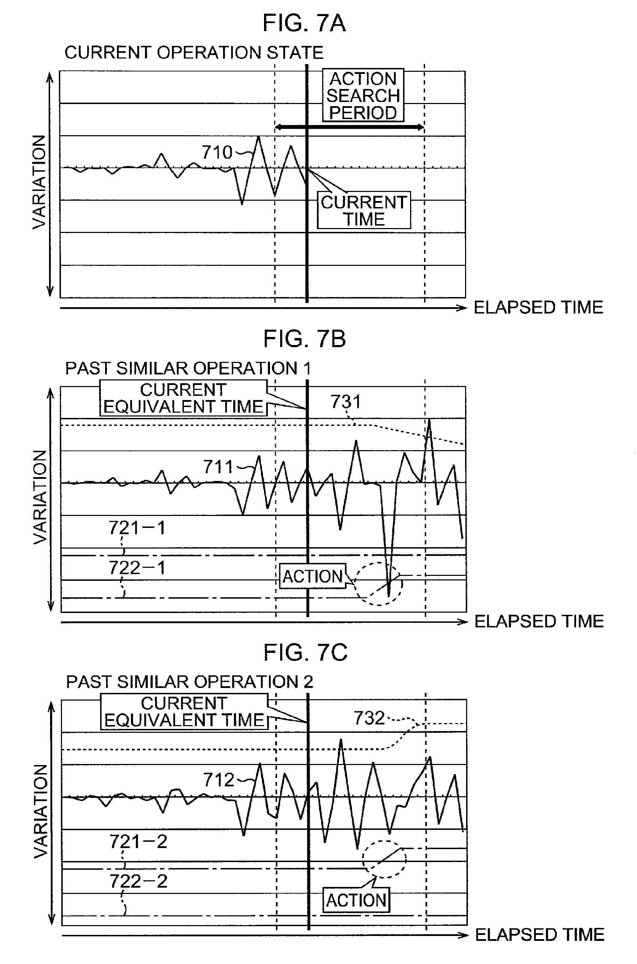

Figs. 7A to 7C are schematic diagrams showing examples of images related to the process of the operation supporting apparatus 120 according to the embodiment of the present invention.

Fig. 7A shows data of "ROLLING FORCE" that is similar operation search target process data 710 in the current operation process data 1263b along with the elapsed time.

Figs. 7B and 7C show examples of the past operation process data 1263a searched by the similarity operation search unit 303 as data similar to the current operation process data 1263b shown in Fig. 7A. In this case, Figs. 7B and 7C respectively show similar operation search target process data (data of "ROLLING FORCE" shown in Fig. 6A) 711 and 712 in the past operation process data 1263a along with the elapsed time.

Fig. 7B further shows operable process data 721-1 and 722-1 in the past operation process data 1263a along with the elapsed time and shows evaluation target process data 731 in the past operation process data 1263a along with the elapsed time. Similarly, Fig. 7C shows operable process data 721-2 and 722-2 in the past operation process data 1263a along with the elapsed time and shows evaluation target process data 732 in the past operation process data 1263a along with the elapsed time.

Figs. 7B and 7C show, for example, the data of "ROLLING POSITION" shown in Fig. 6A as the operable process data 721 (721-1 and 721-2) and show other operable process data that can be operated by the operator 200 in the manufacturing facility 140 not clearly shown in Fig. 6A as the operable process data 722 (722-1 and 722-2). Figs. 7B and 7C show, for example, the data of "PLATE FLATNESS" shown in Fig. 6A as the evaluation target process data 731 and 732. In this case, although not specifically shown in Figs. 7B and 7C, there is, of course, the data of "PLATE CURVATURE" shown in Fig. 6A.

Fig. 3 will be described again.

The action determination unit 304 executes a process of determining whether there is an action of an operation by the operator 200 in the operation of the operable process data based on the operable process data (such as the data of "ROLLING POSITION" shown in Figs. 6A and 6B) of the operation process data 1263 stored in the operation process data storage area 126C. In this case, the action determination unit 304 uses the action determination table 1264 stored in the action determination table storage area 126D to determine whether there is an action of an operation by the operator 200.

Hereinafter, details of the operation action determination process by the action determination unit 304 of the present embodiment will be described.

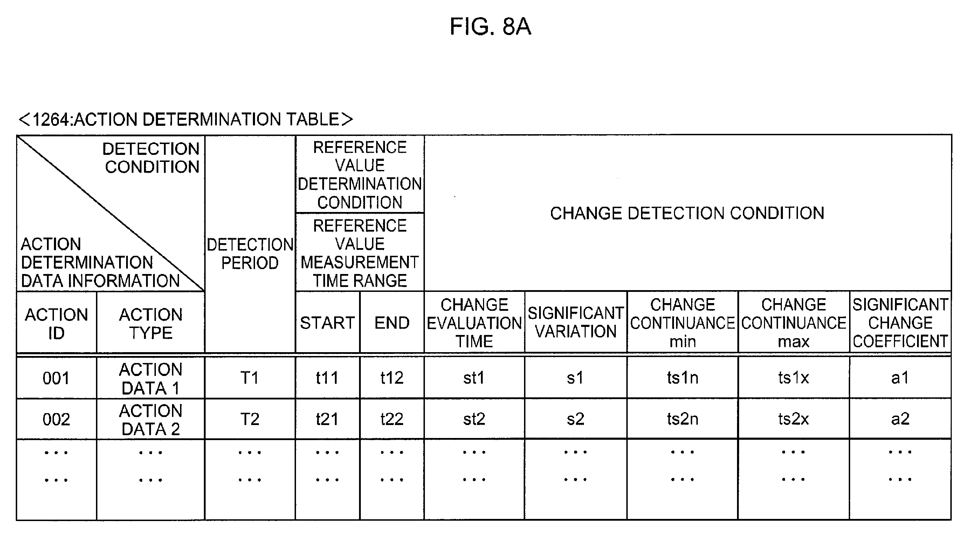

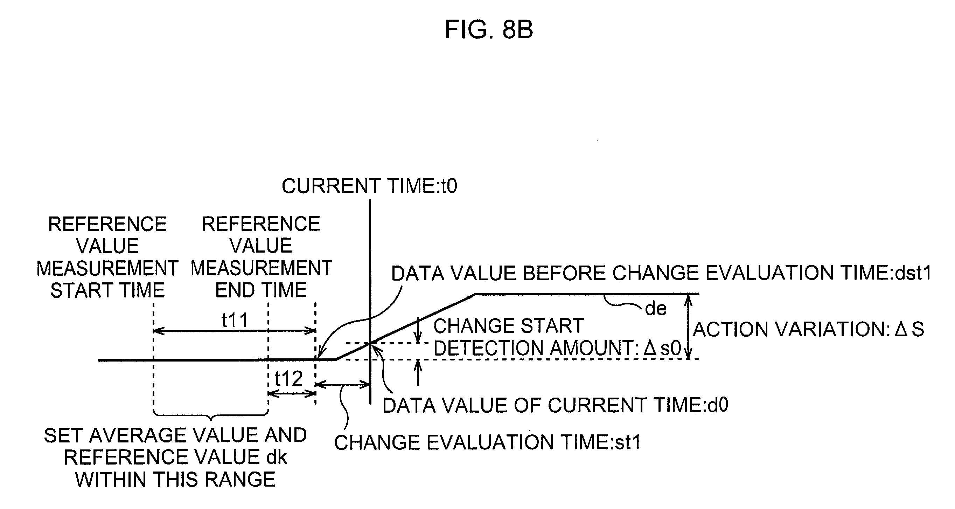

Fig. 8A is a schematic diagram showing an example of the action determination table 1264 stored in the action determination table storage area 126D shown in Fig. 3. Fig. 8B is a schematic diagram showing an image of a process using the action determination table 1264 shown in Fig. 8A.

In Fig. 8A, actions IDs of action determination data information are identification information allocated by the types of the actions of the operations by the operator 200. For example, action data 1 of an action ID 001 is equivalent to the operable process data (data of "ROLLING POSITION" shown in Fig. 6A) 721-1 and 721-2 shown in Figs. 7B and 7C, and action data 2 of an action ID 002 is equivalent to the operable process data 722-1 and 722-2 shown in Figs. 7B and 7C.

The action determination table 1264 shown in Fig. 8A defines, for each type of action data (also called action determination data), a detection period, reference value determination conditions based on a start time and an end time of a reference value measurement time range, and change detection conditions based on a change evaluation time, a significant variation, a change continuance min (minimum), a change continuance max (maximum), and a significant change coefficient in the action data.

Fig. 8B specifically shows an image of a process by the action determination unit 304 using the action determination table 1264 when the type of the operable process data is the action data 1 of the action ID 001 shown in Fig. 8A. Fig. 8B shows a start time t11 of the reference value measurement time range and an end time t12 of the reference value measurement time range as well as a change evaluation time st1. The current time is t0. Hereinafter, the process of the action determination unit 304 based on the action determination table 1264 will be described with reference to Fig. 8B.

[1] Detection of Change Start

If a data value of the current time to of the operable process data (data of "ROLLING POSITION") in the action data 1 is designated with d0, and a data value of the time (t0 to st1) before change evaluation time is designated with dst1, a change start detection amount As0 shown in Fig. 8B can be expressed as the following formula (1).

$$\Delta s0 = d0 - dst1 \ ... \ (1)$$

Although Fig. 8B shows an example in which the data value dst1 is an instantaneous value, the data value dst1 may be an average value of a certain time width around the time before the change evaluation time.

If the following formula (2) is satisfied, the action determination unit 304 determines that the change in the operable process data is started (the time is equivalent to the reference value measurement start time shown in Fig. 8B)

$$\Delta s0 \geqq s1 \ ... \ (2)$$

In the formula (2), s1 is equivalent to a value of the significant variation defined in the action determination table 1264 shown in Fig. 8A.

[2] Calculation of Reference Value

If the change start is detected in the process of [1], the action determination unit 304 calculates a reference value by the following method

Specifically, the range of (t0 - st1 - t11) time to (t0 - st1 - t12) time is set as a reference value measurement time range, and an average value of the operable process data in the reference value measurement time range is calculated as a reference value dk.

[3] Monitoring of Change Continuance and Determination of Change End

(i) Monitoring of Change Continuance

If the state in which the condition of formula (2) is satisfied continues, ts = ts + T1 is set (initially, ts = T1) to count up the change continuance time.

(ii) Determination of Change End

The change end is determined when the condition of formula (2) is not satisfied any more, and the data value of the operable process data at this time is designated with de.

Other than an instantaneous value at the change end, the data value de may be, for example, an average value in a certain time width around the change end.

[4] Determination of Change Significance

(i) Determination of Significance of Change Continuance Time

If the change end is determined in the process of [3], the action determination unit 304 determines that there is significance if the change continuance time ts satisfies the following formula (3).

$$ts1n \leqq ts \leqq ts1x \ ... \ (3)$$

(ii) Determination of Significance of Change Coefficient

If it is determined that there is significance of the change continuance time in [4](i), the action determination unit 304 determines the signification of the operation action by the operator 200 in the operable process data by the following method.

The action determination unit 304 first calculates an action variation ΔS of the operable process data by the following formula (4).

$$\Delta S = de - dk \quad \dots \quad (4)$$

The action determination unit 304 then calculates a change coefficient (inclination) A of the operable process data by the following formula (5).

$$A = \Delta S / ts \quad \dots \quad (5)$$

The action determination unit 304 determines that there is an operation action by the operator 200 in the operable process data if the following formula (6) is satisfied.

$$A \geqq a1 \quad \dots \quad (6)$$

More specifically, the action determination unit 304 determines that there is an operation action by the operator 200 if a change coefficient A as a variation (action variation ΔS) relative to a predetermined time (change continuance time ts) of the operable process data of the operation process data 1263 stored in the operation process data storage area 126C is equal to or greater than a predetermined threshold (significant change coefficient a1).

If it is determined that there is an action, the action determination unit 304 stores the data related to the action in the action data storage area 126E of the information storage medium 126 as the action data 1265. In the example shown in Fig. 7B, the operable process data 722 (722-1) illustrates a case in which it is determined that there is an action. In the example shown in Fig. 7C, the operable process data 721 (721-2) illustrates a case in which it is determined that there is an action.

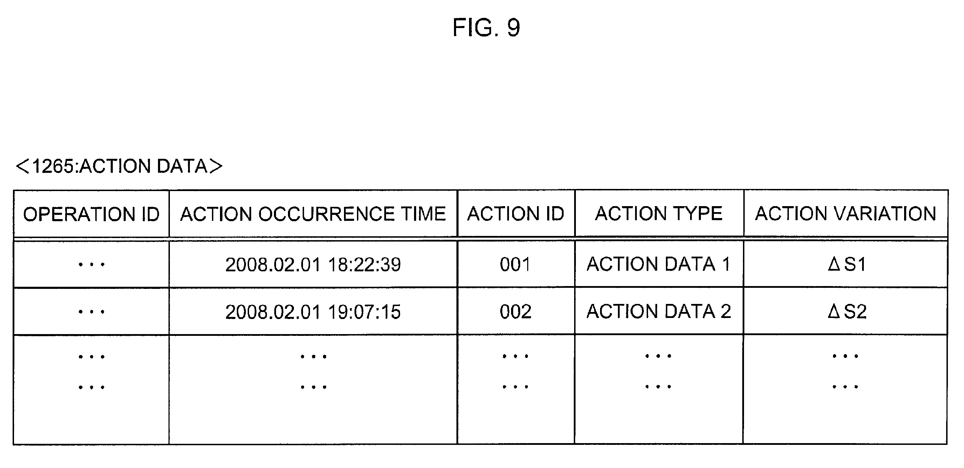

Fig. 9 is a schematic diagram showing an example of the action data 1265 stored in the action data storage area 126E shown in Fig. 3.

As shown in Fig. 9, the action data 1265 associates and stores the operation ID based on the operation process data shown in Figs. 6A and 6B, information of action occurrence time indicating the occurrence time of the action, information of the action ID and the action type shown in Fig. 8A, and information of the action variation (AS). In this case, the action occurrence time information indicates, for example, the current time t0 in the example shown in Fig. 8A.

Fig. 3 will be described again.

The action past operation search unit 305 searches the action data in the past operation process data 1263a searched by the similar operation search unit 303 from the action data 1265 stored in the action data storage area 126E based on the operation ID.

Specifically, in the search of the action data in the past operation process data 1263a searched by the similar operation search unit 303, the action past operation search unit 305 searches the action data within a range of a predetermined time (action search period shown in Fig. 7A) before and after equivalent time (current equivalent time shown in Figs. 7B and 7C) of the past operation process data 1263a equivalent to the current time (current time shown in Fig. 7A) of the current operation process data 1263b. The action search period is set in the action search period definition table 1266 for each type of the action.

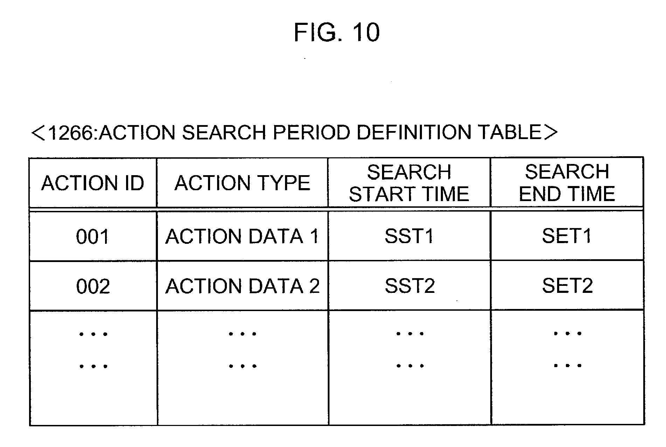

Fig. 10 is a schematic diagram showing an example of the action search period definition table 1266 stored in the action search period definition table storage area 126F shown in Fig. 3.

As shown in Fig. 10, the action search period definition table 1266 shows information of the action ID and the action type as information indicating the type of the action data 1265 shown in Fig. 9 as well as the search start time and the search end time indicating the action search period of each action data. The search start time and the search end time indicate relative time from the current equivalent time in the past similar operation. Therefore, a search start hour and a search start hour are as follows.

```
Search start hour = current equivalent time +
search start time
```

```
Search end hour = current equivalent time +
search end time
```

In this case, the action search period by the action past operation search unit 305 is from the search start hour to the search end hour. In the example shown in Figs. 7A to 7C, the search start time in the action search period definition table 1266 is a negative value, and the search end time is a positive value. However, the mode is not limited to this, and the search start time and the search end time can be set to arbitrary values as necessary.

The similar operation evaluation unit 306 uses the evaluation target process data (data of "PLATE CURVATURE" and "PLATE FLATNESS" shown in Figs. 6A and 6B) in the operation process data 1263 to evaluate the action data searched by the action past operation search unit 305.

Hereinafter, details of the evaluation process of the action data by the similar operation evaluation unit 306 of the present embodiment will be described.

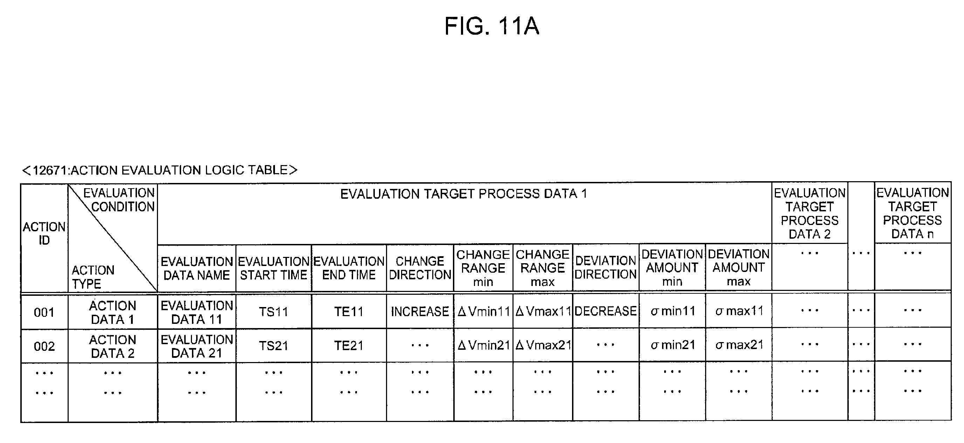

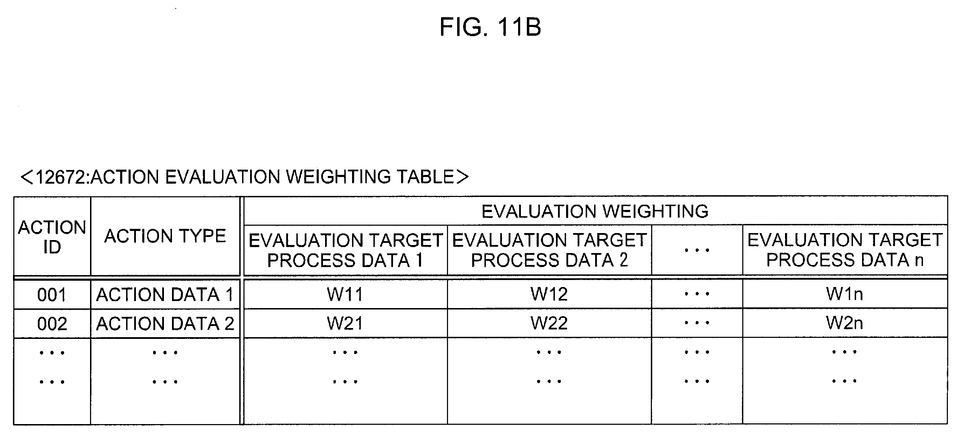

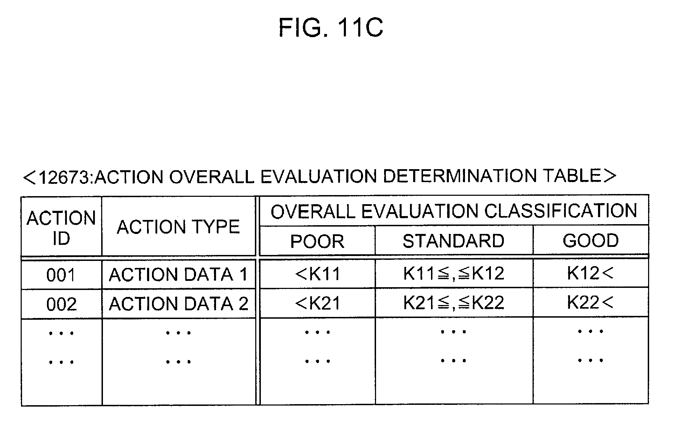

Fig. 11A is a schematic diagram showing an example of an action evaluation logic table 12671 included in the action evaluation table 1267 stored in the action evaluation table storage area 126G shown in Fig. 3. Fig. 11B is a schematic diagram showing an example of an action evaluation weighting table 12672 included in the action evaluation table 1267 stored in the action evaluation table storage area 126G shown in Fig. 3. Fig. 11c is a schematic diagram showing an example of an action overall evaluation determination table 12673 included in the action evaluation table 1267 stored in the action evaluation table storage area 126G shown in Fig. 3.
More specifically, the action evaluation table 1267 illustrates the action evaluation logic table 12671 shown in Fig. 11A, the action evaluation weighting table 12672 shown in Fig. 11B, and the action overall evaluation determination table 12673 shown in Fig. 11C. The tables shown in Figs. 11A to 11C define a variety of information for each piece of information of the action ID and the action type indicating the type of the action data 1265.

The action evaluation logic table 12671 shown in Fig. 11A defines conditions for obtaining an evaluation value of evaluation data for each evaluation target process data of the operation process data 1263 in accordance with the type of the action data 1265. For example, evaluation target process data 1 is the data of "PLATE FLATNESS" shown in Figs. 6A and 6B, and evaluation target process data 2 is the data of "PLATE CURVATURE" shown in Figs. 6A and 6B. The evaluation conditions of up to evaluation target process data n are defined in accordance with the number of evaluation target process data n of the operation process data 1263. In the example shown in Fig. 11A, although only the evaluation items of the evaluation conditions of the evaluation target process data 1 are illustrated in detail, the evaluation items of the evaluation conditions are set in detail for the evaluation target process data 2 and the following data as in the evaluation target process data 1..

Hereinafter, an example of an evaluation process for the action data 1 shown in Fig. 11A (data of "ROLLING POSITION" shown in Figs. 6A and 6B) will be described.

The evaluation of the evaluation target process data 1 (data of "PLATE FLATNESS" shown in Figs. 6A and 6B) of the action data 1 is first set as evaluation data 11. In this case, since an action in the action data 1 may not be immediately reflected on the evaluation target process data 1, an evaluation period in the evaluation target process data 1 is provided in the present example. Specifically, in the present example, the action occurrence time shown in the action data 1265 of Fig. 9 (action occurrence time of the action data 1 shown in Fig. 9 in the present example) is set as T0 to set a range of (T0 + TS11) time to (T0 + TE11) time as the evaluation period.

The similar operation evaluation unit 306 first obtains an initial value V0, an end value VE, a maximum value Vmax, a minimum value Vmin, and a standard deviation $\sigma1$ in the evaluation period of the evaluation target process data 1.

Subsequently, the similar operation evaluation unit 306 compares the initial value V0 and the end value VE in the evaluation period to obtain a change direction. The similar operation evaluation unit 306 then evaluates the obtained change direction based on a change direction ("INCREASE" in the example shown in Fig. 11A) of the action evaluation logic table 12671 shown in Fig. 11A.

Subsequently, the similar operation evaluation unit 306 calculates a difference between the maximum value Vmax and the initial value V0 if the obtained changed direction indicates "INCREASE" and calculates a difference between the initial value V0 and the minimum value Vmin if the obtained change direction indicates "DECREASE" to calculate a change value. The similar operation evaluation unit 306 then evaluates whether the obtained change value is within a range between a change range ΔVmin11 and a change range ΔVmax11 of the action evaluation logic table 12671 shown in Fig. 11A.

Subsequently, the similar operation evaluation unit 306 obtains a deviation direction of the standard deviation σ1 and evaluates the obtained deviation direction based on the deviation direction ("DECREASE" in the example shown in Fig. 11A) of the action evaluation logic table 12671 shown in Fig. 11A. The similar operation evaluation unit 306 also evaluates whether the standard deviation σ1 is within a range between a deviation amount Δσmin11 and a deviation amount Δσmax11 of the action evaluation logic table 12671 shown in Fig. 11A.

Subsequently, the similar operation evaluation unit 306 performs overall evaluation in the evaluation target process data 1. Various methods, such as a method of providing scores to the evaluation items based on whether the conditions are satisfied or not satisfied, a method of setting at least a designated condition as an absolute condition and providing no point if the condition is not satisfied to multiply the point by the scores of the other evaluation items, and a method of using deviation amounts from condition values of the evaluation items as evaluation amounts can be applied as a method of the overall evaluation. For the simplification of the description, the present example applies an example in which an evaluation value is "1" if all evaluation items of the evaluation conditions are satisfied, and the evaluation value is "0" if at least one of the evaluation items is not satisfied.

As in the evaluation of the evaluation target process data 1 of the action data 1, the evaluation target process data 2 (data of "PLATE CURVATURE" shown in Figs. 6A and 6B) and the data acquired as the evaluation target process data of the operation process data 1263 shown in Figs. 6A and 6B are evaluated to calculate the evaluation value of each evaluation target process data. If there are the action data 2 and other action data, a process of calculating the evaluation value of each evaluation target process data is executed as in the action data 1.

Subsequently, the similar operation evaluation unit 306 uses the action evaluation weighting table 12672 shown in Fig. 11B to weight the evaluation values based on the evaluation target process data of the action data 1 to calculate an overall evaluation value H1 of the action data 1. Specifically, the overall evaluation value H1 is calculated by (evaluation value of evaluation target process data 1) x (weight coefficient W11) + (evaluation value of evaluation target process data 2) x (weight coefficient W12) + ... (evaluation value of evaluation target process data n) x (weight coefficient W1n). In this case, a mode of applying 1 to all weight coefficients, i.e. a mode of simply adding the evaluation values of the evaluation target process data to calculate the overall evaluation value H1, is also included in the present embodiment. If there are the action data 2 and other action data, an overall evaluation value H2 and the like are calculated in the same way as for the action data 1.

Subsequently, the similar operation evaluation unit 306 uses the calculated overall evaluation value H1 to evaluate the action data 1 based on the action overall evaluation determination table 12673 shown in Fig. 11C. Specifically, the similar operation evaluation unit 306 determines that the operation action based on the action data 1 is poor if the overall evaluation value H1 is smaller than K11. The similar operation evaluation unit 306 determines that the operation action based on the action data 1 is standard (normal) if the overall evaluation value H1 is equal to or greater than K11 and equal to or smaller than K12 (K12 > K11). The similar operation evaluation unit 306 determines that the operation action based on the action data 1 is good if the overall evaluation value H1 is greater than K12.

If there are the action data 2 and other action data, the overall evaluation value is used to evaluate the data based on the action overall evaluation determination table 12673 shown in Fig. 11C in the same way as for the action data 1.

For example, the evaluation target process data 731 and 732 shown in Figs. 7B and 7C illustrate the evaluation target process data 1 (data of "PLATE FLATNESS" shown in Figs. 6A and 6B). In this case, the value of the evaluation target process data 731 shown in Fig. 7B decreases after the action of the operable process data 722-1, and the present example illustrates an example of the type in which the evaluation is poor. The value of the evaluation target process data 732 shown in Fig. 7C increases after the action of the operable process data 721-2, and the present example illustrates an example of the type in which the evaluation is good.

As described, the similar operation evaluation unit 306 calculates the evaluation value of the action data searched by the action past operation search unit 305 for each evaluation target process data in the operation process data 1263 and evaluates the action data based on the calculated evaluation value.

Fig. 3 will be described again.

The past operation guidance indication control unit 307 controls to display the action data searched by the action past operation search unit 305 on the CRT display device 130 and controls to indicate the action data to the operator 200. In this case, the past operation guidance indication control unit 307 controls to display the action data searched by the action past operation search unit 305 on the CRT display device 130 along with the evaluation result in the similar operation evaluation unit 306 to indicate the evaluation result to the operator 200. In this case, the past operation guidance indication control unit 307 may indicate the action data and the evaluation result to the operator 200 by sound, in addition to or instead of the display on the CRT display device 130. When the past operation guidance indication control unit 307 displays the action data searched by the action past operation search unit 305 on the CRT display device 130, the past operation guidance indication control unit 307 may control to display only the action data with "GOOD" evaluation results in the similar operation evaluation unit 306 among the action data searched by the action past operation search unit 305 to indicate the action data to the operator 200.

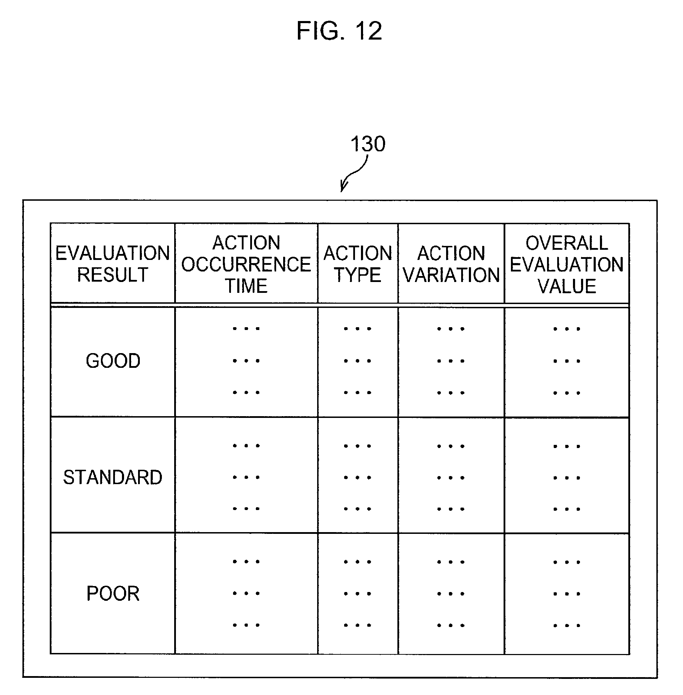

Fig. 12 is a schematic diagram showing an example of a display screen displayed on the CRT display device 130 shown in Fig. 1. The display screen displayed on the CRT display device 130 is based on the control of the past operation guidance indication control unit 307.

Specifically, the display screen of the CRT display device 130 shown in Fig. 12 shows information (action occurrence time information, action type information, and action variation information) of the action data searched by the action past operation search unit 305 among the action data 1265 shown in Fig. 9, information of the evaluation result in the similar operation evaluation unit 306, and the overall evaluation value of the evaluation. More specifically, the past operation guidance indication control unit 307 indicates the action data by controlling to classify the action data searched by the action past operation search unit 305 based on the evaluation results (good, standard, and poor) in the similar operation evaluation unit 306 to display the action data on the CRT display device 130 as a display device of the area where the operator 200 exists.

A processing procedure of the operation supporting method by the operation supporting apparatus 120 will be simply described.

Fig. 13 is a flow chart showing an example of the processing procedure of the operation supporting method by the operation supporting apparatus 120 according to the embodiment of the present invention. The CPU 121 executes the control program 1251 to conduct the flow chart shown in Fig. 13. The flow chart of Fig. 13 described below will be described in conjunction with the functional configuration shown in Fig. 3.

It is assumed that the past operation process data 1263a is stored in the operation process data storage area 126C before the process of the flow chart shown in Fig. 13, and the current operation process data 1263b is acquired in the following process.

In step S101 of Fig. 13, the manufacturing condition data acquisition unit 301 acquires the current manufacturing condition data 1261 and the operation ID related to the manufacturing conditions of the manufacturing facility 140 from the host computer 110. The manufacturing condition data acquisition unit 301 stores the acquired current manufacturing condition data 1261 in the manufacturing condition data storage area 126A in association with the operation ID. In this case, the manufacturing condition data acquisition unit 301 transmits the acquired operation ID to the operation process data acquisition unit 302.

In step S102, the operation process data acquisition unit 302 acquires the operation process data 1263 related to the operation of the manufacturing facility 140 from the facility management apparatus 141 of the manufacturing facility 140. The operation process data acquisition unit 302 sets the acquired operation process data 1263 as the current operation process data 1263b and stores the data in the operation process data storage area 126C of the information storage medium 126 in association with the operation ID obtained from the manufacturing condition data acquisition unit 301. As described, a piece of operation process data includes the similar operation search target process data to be searched by the similar operation search unit 303, the operable process data that can be operated by the operator 200 in the manufacturing facility 140 through the facility adjustment apparatus 142, and the evaluation target process data as a target of evaluation of the action data based on the operable process data.

In step S103, the similar operation search unit 303 first uses the similar operation determination table 1262 (Fig. 5) stored in the similar operation determination table storage area 126B to search similar past manufacturing condition data from the past manufacturing condition data stored in the manufacturing condition data storage area 126A and specifies the operation ID of the similar operation to narrow down the search range. The similar operation search unit 303 then sets the narrowed past operation process data 1263a as the search range and executes a process of searching the past operation process data 1263a similar to the current operation process data 1263b from the past operation process data 1263a based on the similar operation search target process data of the current operation process data 1263b.

In S104, the action determination unit 304 executes a process of determining whether there is an action of an operation by the operator 200 in the operation of the operable process data based on the operable process data of the operation process data 1263 stored in the operation process data storage area 126C. In this case, the action determination unit 304 uses the action determination table 1264 (Fig. 8A) stored in the action determination table storage area 126D to determine whether there is an action of an operation by the operator 200. If it is determined that there is an action, the action determination unit 304 stores the action data 1265 related to the action in the action data storage area 126E in association with the operation ID.

In step S105, the action past operation search unit 305 searches the action data related to the past operation process data 1263a searched by the similar operation search unit 303 from the action data 1265 stored in the action data storage area 126E based on the operation ID.

In step S106, the similar operation evaluation unit 306 uses the evaluation target process data in the operation process data 1263 to evaluate the action data searched by the action past operation search unit 305 based on the action evaluation table 1267 (Figs. 11A to 11C) stored in the action evaluation table storage area 126G.

In step S107, the past operation guidance indication control unit 307 controls to display the action data searched by the action past operation search unit 305 on the CRT display device 130 along with the evaluation result in the similar operation evaluation unit 306 to indicate the action data to the operator 200. In step S107, when the past operation guidance indication control unit 307 displays the action data searched by the action past operation search unit 305 on the CRT display device 130, the past operation guidance indication control unit 307 may control to display only the action data with "GOOD" evaluation result in the similar operation evaluation unit 306 among the action data searched by the action past operation search unit 305 to indicate the action data to the operator 200.

In the example shown in Figs. 6A and 6B, the data of "ROLLING POSITION" is acquired as the similar operation search target process data, the data of "PLATE CURVATURE" and "PLATE FLATNESS" is acquired as the evaluation target process data, and the similar operation search target process data and the evaluation target process data are different data. However, the present invention is not limited to the mode, and a mode of acquiring the similar operation search target process data and the evaluation target process data as the same data can also be applied. For example, a mode of acquiring the data of "PLATE FLATNESS" shown in Figs. 6A and 6B as the evaluation target process data and as the similar operation search target process data can also be applied. In this case, the similar operation search unit 303 searches the past operation process data similar to the current operation process data from the past operation process data based on the data of "PLATE FLATNESS".

According to the embodiment of the present invention, the action data searched by the action past operation search unit 305 is indicated to the operator 200 along with the evaluation result in the similar operation evaluation unit 306. Therefore, the operator 200 can determine what kind of operation related to the operation of the manufacturing facility 140 should be performed in the future.

The CPU 121 can execute the control program 1251 to realize the steps of Fig. 13 showing the operation supporting method by the operation supporting apparatus 120 according to the present embodiment. The program and a computer-readable storage medium recording the program are included in the present invention.

Specifically, the program is provided to the computer by recording the program in a storage medium, such as a CD-ROM, or through various transmission media. Other than the CD-ROM, a flexible disk, a hard disk, a magnetic tape, a magneto-optical disk, a nonvolatile memory card, and the like can be used as the storage medium that records the program. Meanwhile, a communication medium in a computer network (LAN, WAN such as Internet, wireless communication network, and the like) system for transmitting program information as a carrier to supply the program information can be used as the transmission media of the program. Examples of the communication medium include a wire line, such as an optical fiber, and a wireless line.

The present invention is not limited to a mode of realizing the functions of the operation supporting apparatus 120 according to the present embodiment through the execution of the supplied program by the computer. The program is also included in the present invention when the program realizes the functions of the operation supporting apparatus 120 according to the present embodiment in cooperation with an OS (operating system) or other application software operated on the computer. The program is also included in the present invention when a function expansion board or a function expansion unit of the computer execute all or part of the processes of the supplied program to realize the functions of the operation supporting apparatus 120 according to the present embodiment.

The present embodiment just illustrates an example of materialization in the implementation of the present invention, and the present embodiment should not be construed as limiting the technical scope of the present invention. More specifically, the present invention can be carried out in various forms without departing from the technical concept and main features of the present invention.

INDUSTRIAL APPLICABILITY

The present invention can provide a technique for supporting an operator to easily and appropriately determine what kind of operation related to an operation of a manufacturing facility should be performed in the future. As a result, for example, the present invention is expected to contribute to allow even an unskilled operator to properly handle the situation when there is a problem in the operation.

**Claims**

1. An operation supporting apparatus that supports an operation of a manufacturing facility that manufactures a product, the operation supporting apparatus comprising:

   operation process data acquisition means for acquiring operation process data that is process data related to the operation of the manufacturing facility and that includes first process data as a performance value which is set based on an operation by an operator in the manufacturing facility and second process data including data related to a quality of the product or a quality of the operation;
operation process data storage means for storing past operation process data in past operations of the manufacturing facility that is stored in the past and current operation process data in a current operation of the manufacturing facility, the past operation process data and the current operation process data being the operation process data acquired by the operation process data acquisition means;
similar operation search means for searching past operation process data similar to the current operation process data from the past operation process data based on the first process data or the second process data in the current operation process data;
action determination means for determining whether there is an action of an operation by the operator in the operation in the first process data based on the first process data;
action data storage means for storing action data related to the action determined by the action determination means;
action past operation search means for searching the action data related to the past operation process data searched by the similar operation search means from the action data stored in the action data storage means; and
evaluation means for evaluating the action data searched by the action past operation search means using the second process data.

2. The operation supporting apparatus according to claim 1, further comprising
indication control means for controlling to indicate the action data searched by the action past operation search means along with an evaluation result in the evaluation means.

3. The operation supporting apparatus according to claim 1, wherein
the operation process data acquisition means acquires, as the second process data, similar operation search target process data in addition to evaluation target process data as data related to the quality of the product or the quality of the operation,
the similar operation search means searches the past operation process data similar to the current operation process data from the past operation process data based on the similar operation search target process data, and
the evaluation means evaluates the action data searched by the action past operation search means using the evaluation target process data.

4. The operation supporting apparatus according to claim 3, wherein
the similar operation search target process data includes at least one of a measurement value by a sensor arranged on the manufacturing facility and a performance value related to a state of the manufacturing facility.

5. The operation supporting apparatus according to claim 3, wherein
the operation process data acquisition means acquires a plurality of evaluation target process data in one of the operation process data, and
the evaluation means calculates an evaluation value of the action data searched by the action past operation search means for each of the evaluation target process data to evaluate the action data based on each of the calculated evaluation values.

6. The operation supporting apparatus according to claim 1, further comprising:

manufacturing condition data acquisition means for acquiring manufacturing condition data related to a manufacturing condition of the manufacturing facility; and
manufacturing condition data storage means for storing past manufacturing condition data and current manufacturing condition data in the manufacturing facility, the past manufacturing condition data and the current manufacturing condition data being manufacturing condition data acquired by the manufacturing condition data acquisition means, wherein
the operation process data acquisition means acquires the operation process data in association with the manufacturing condition data,
the operation process data storage means stores the past operation process data in association with the past manufacturing condition data and stores the current operation process data in association with the current manufacturing condition data, and
the similar operation search means searches past manufacturing condition data similar to the current manufacturing condition data in the current operation process data from the past manufacturing condition data and sets the past operation process data associated with the searched past manufacturing condition data as a search range to search the past operation process data similar to the current operation process data.

**7.** The operation supporting apparatus according to claim 1, wherein
the action determination means determines that there is the action if a variation relative to a predetermined time of the first process data is equal to or greater than a predetermined threshold.

**8.** The operation supporting apparatus according to claim 1, wherein
the action data storage means stores the action data with time information, and
when the action past operation search means searches the action data related to the past operation process data searched by the similar operation search means, the action past operation search means searches the action data within a range of a predetermined period before and after an equivalent time of the past operation process data equivalent to a current time of the current operation process data.

**9.** The operation supporting apparatus according to claim 2, wherein
the indication control means controls to classify the action data based on the evaluation results by the evaluation means to display the action data on a display device to indicate the action data.

**10.** An operation supporting method by an operation supporting apparatus that supports an operation of a manufacturing facility that manufactures a product, the operation supporting method comprising:

an operation process data acquisition step of acquiring operation process data that is process data related to the operation of the manufacturing facility and that includes first process data as a performance value which is set based on an operation by an operator in the manufacturing facility and second process data including data related to a quality of the product or a quality of the operation;
an operation process data storage step of storing, in operation process data storage means of the operation supporting apparatus, past operation process data in past operations of the manufacturing facility that is stored in the past and current operation process data in a current operation of the manufacturing facility, the past operation process data and the current operation process data being the operation process data acquired in the operation process data acquisition step;
a similar operation search step of searching past operation process data similar to the current operation process data from the past operation process data based on the first process data or the second process data in the current operation process data;
an action determination step of determining whether there is an action of an operation by the operator in the operation in the first process data based on the first process data;
an action data storage step of storing, in action data storage means of the operation supporting apparatus, action data related to the action determined in the action determination step;
an action past operation search step of searching the action data related to the past operation process data searched in the similar operation search step from the action data stored in the action data storage means; and
an evaluation step of evaluating the action data searched in the action past operation search step using the second process data.

**11.** The operation supporting method according to claim 10, further comprising
an indication control step of controlling to indicate the action data searched in the action past operation search step along with an evaluation result in the evaluation step.

**12.** The operation supporting method according to claim 10, wherein
in the operation process data acquisition step, similar operation search target process data is acquired as the second process data in addition to evaluation target process data as data related to the quality of the product or the quality of the operation,
in the similar operation search step, the past operation process data similar to the current operation process data is searched from the past operation process data based on the similar operation search target process data, and
in the evaluation step, the action data searched in the action past operation search step is evaluated using the evaluation target process data.

**13.** The operation supporting method according to claim 12, wherein
the similar operation search target process data includes at least one of a measurement value by a sensor arranged on the manufacturing facility and a performance value related to a state of the manufacturing facility.

**14.** The operation supporting method according to claim 12, wherein
in the operation process data acquisition step, a plurality of the evaluation target process data is acquired in one of the operation process data, and

in the evaluation step, an evaluation value of the action data searched in the action past operation search step is calculated for each evaluation target process data to evaluate the action data based on each of the calculated evaluation values.

**15.** The operation supporting method according to claim 10, further comprising:

a manufacturing condition data acquisition step of acquiring manufacturing condition data related to a manufacturing condition of the manufacturing facility; and

a manufacturing condition data storage step of storing, in manufacturing condition data storage means of the operation supporting apparatus, past manufacturing condition data and current manufacturing condition data in the manufacturing facility, the past manufacturing condition data and the current manufacturing condition data being manufacturing condition data acquired in the manufacturing condition data acquisition step, wherein in the operation process data acquisition step, the operation process data is acquired in association with the manufacturing condition data,

the operation process data storage means stores the past operation process data in association with the past manufacturing condition data and stores the current operation process data in association with the current manufacturing condition data, and

in the similar operation search step, past manufacturing condition data similar to the current manufacturing condition data in the current operation process data is searched from the past manufacturing condition data, and the past operation process data associated with the searched past manufacturing condition data is set as a search range to search the past operation process data similar to the current operation process data.

**16.** The operation supporting method according to claim 10, wherein

in the action determination step, it is determined that there is the action if a variation relative to a predetermined time of the first process data is equal to or greater than a predetermined threshold.

**17.** The operation supporting method according to claim 10, wherein

the action data storage means stores the action data with time information, and

in the action past operation search step, when the action data related to the past operation process data searched in the similar operation search step is searched, the action data is searched within a range of a predetermined period before and after an equivalent time of the past operation process data equivalent to a current time of the current operation process data.

**18.** The operation supporting method according to claim 11, wherein

in the indication control step, control is performed to classify the action data based on the evaluation results in the evaluation step to display the action data on a display device to indicate the action data.

**19.** A program product for causing a computer to execute an operation supporting method by an operation supporting apparatus that supports an operation of a manufacturing facility that manufactures a product, the program product causing the computer to execute:

an operation process data acquisition step of acquiring operation process data that is process data related to the operation of the manufacturing facility and that includes first process data as a performance value which is set based on an operation by an operator in the manufacturing facility and second process data including data related to a quality of the product or a quality of the operation;

an operation process data storage step of storing, in operation process data storage means of the operation supporting apparatus, past operation process data in past operations of the manufacturing facility that is stored in the past and current operation process data in a current operation of the manufacturing facility, the past operation process data and the current operation process data being the operation process data acquired in the operation process data acquisition step;

a similar operation search step of searching past operation process data similar to the current operation process data from the past operation process data based on the first process data or the second process data in the current operation process data;

an action determination step of determining whether there is an action of an operation by the operator in the operation in the first process data based on the first process data;

an action data storage step of storing, in action data storage means of the operation supporting apparatus, action data related to the action determined in the action determination step;

an action past operation search step of searching the action data related to the past operation process data searched in the similar operation search step from the action data stored in the action data storage means; and an evaluation step of evaluating the action data searched in the action past operation search step using the second process data.

20. The program product according to claim 19, further causing the computer to execute
an indication control step of controlling to indicate the action data searched in the action past operation search step along with an evaluation result in the evaluation step.

## FIG. 1

<u>100</u>

| HOST COMPUTER | ~110 |

~150−1

| OPERATION SUPPORTING APPARATUS (PROCESS COMPUTER) | ~120 |

150−2

140−1

130

140−2

141~ FACILITY MANAGEMENT APPARATUS

142 --- (S) (M) ⋈ ...

1421  1422  1423

FACILITY MANAGEMENT APPARATUS

(S) (M) ⋈ ...

...

200

EP 2 453 403 A1

## FIG. 2

<u>120</u>

## FIG. 3

EP 2 453 403 A1

# FIG. 4

<1261:MANUFACTURING CONDITION DATA>

| OPERATION ID | FINISHING SIZE | | | FINISHING TEMPERATURE | PRODUCT TYPE | . . . |
| --- | --- | --- | --- | --- | --- | --- |
| | THICKNESS | WIDTH | LENGTH | | | |
| 1 | . . . | . . . | . . . | . . . | . . . | . . . |
| . . . | . . . | . . . | . . . | . . . | . . . | . . . |
| 40 | . . . | . . . | . . . | . . . | . . . | . . . |
| 41 | 10mm | 2700mm | 30m | 735°C | AAAA | . . . |

# FIG. 5

<1262:SIMILAR OPERATION DETERMINATION TABLE>

| MANUFACTURING CONDITION | FINISHING SIZE | | | FINISHING TEMPERATURE | PRODUCT TYPE | ... |
| --- | --- | --- | --- | --- | --- | --- |
| | THICKNESS | WIDTH | LENGTH | | | |
| DETERMINATION CONDITION | WITHIN $\pm \alpha$ mm | WITHIN $\pm \beta$ mm | WITHIN $\pm \gamma$ m | WITHIN $\pm \delta$ °C | AA−− | ... |

# FIG. 6A

<1263a:PAST OPERATION PROCESS DATA>

| OPERATION ID | TIME | ROLLING FORCE | ROLLING POSITION | PLATE CURVATURE | PLATE FLATNESS | . . . |
|---|---|---|---|---|---|---|
| 1 | . . .<br>. . .<br>. . .<br>. . .<br>. . . | . . .<br>. . .<br>. . .<br>. . .<br>. . . | . . .<br>. . .<br>. . .<br>. . .<br>. . . | . . .<br>. . .<br>. . .<br>. . .<br>. . . | . . .<br>. . .<br>. . .<br>. . .<br>. . . | . . .<br>. . .<br>. . .<br>. . .<br>. . . |
| : | : | : | : | : | : | : |
| 40 | . . .<br>. . .<br>. . .<br>. . .<br>. . . | . . .<br>. . .<br>. . .<br>. . .<br>. . . | . . .<br>. . .<br>. . .<br>. . .<br>. . . | . . .<br>. . .<br>. . .<br>. . .<br>. . . | . . .<br>. . .<br>. . .<br>. . .<br>. . . | . . .<br>. . .<br>. . .<br>. . .<br>. . . |

# FIG. 6B

<1263b:CURRENT OPERATION PROCESS DATA>

| OPERATION ID | TIME | ROLLING FORCE | ROLLING POSITION | PLATE CURVATURE | PLATE FLATNESS | . . . |
|---|---|---|---|---|---|---|
| 41 | . . .<br>. . .<br>. . . | . . .<br>. . .<br>. . . | . . .<br>. . .<br>. . . | . . .<br>. . .<br>. . . | . . .<br>. . .<br>. . . | . . .<br>. . .<br>. . . |

## FIG. 7A

CURRENT OPERATION STATE

ACTION SEARCH PERIOD

710

CURRENT TIME

VARIATION

ELAPSED TIME

## FIG. 7B

PAST SIMILAR OPERATION 1

CURRENT EQUIVALENT TIME

731

711

721-1

722-1

ACTION

VARIATION

ELAPSED TIME

## FIG. 7C

PAST SIMILAR OPERATION 2

CURRENT EQUIVALENT TIME

732

712

721-2

722-2

ACTION

VARIATION

ELAPSED TIME

## FIG. 8A

<1264:ACTION DETERMINATION TABLE>

| ACTION DETERMINATION DATA INFORMATION / DETECTION CONDITION | | DETECTION PERIOD | REFERENCE VALUE DETERMINATION CONDITION / REFERENCE VALUE MEASUREMENT TIME RANGE | | CHANGE DETECTION CONDITION | | | | |
|---|---|---|---|---|---|---|---|---|---|
| ACTION ID | ACTION TYPE | | START | END | CHANGE EVALUATION TIME | SIGNIFICANT VARIATION | CHANGE CONTINUANCE min | CHANGE CONTINUANCE max | SIGNIFICANT CHANGE COEFFICIENT |
| 001 | ACTION DATA 1 | T1 | t11 | t12 | st1 | s1 | ts1n | ts1x | a1 |
| 002 | ACTION DATA 2 | T2 | t21 | t22 | st2 | s2 | ts2n | ts2x | a2 |
| . . . | . . . | . . . | . . . | . . . | . . . | . . . | . . . | . . . | . . . |
| . . . | . . . | . . . | . . . | . . . | . . . | . . . | . . . | . . . | . . . |

EP 2 453 403 A1

## FIG. 8B

CURRENT TIME:t0

REFERENCE VALUE MEASUREMENT START TIME

REFERENCE VALUE MEASUREMENT END TIME

DATA VALUE BEFORE CHANGE EVALUATION TIME:dst1

t11

de

ACTION VARIATION: $\Delta S$

CHANGE START DETECTION AMOUNT: $\Delta s0$

t12

DATA VALUE OF CURRENT TIME:d0

SET AVERAGE VALUE AND REFERENCE VALUE dk WITHIN THIS RANGE

CHANGE EVALUATION TIME:st1

FIG. 9

<1265:ACTION DATA>

| OPERATION ID | ACTION OCCURRENCE TIME | ACTION ID | ACTION TYPE | ACTION VARIATION |
|---|---|---|---|---|
| · · · | 2008.02.01 18:22:39 | 001 | ACTION DATA 1 | Δ S1 |
| · · · | 2008.02.01 19:07:15 | 002 | ACTION DATA 2 | Δ S2 |
| · · · | · · · | · · · | · · · | · · · |
| · · · | · · · | · · · | · · · | · · · |

EP 2 453 403 A1

# FIG. 10

<1266:ACTION SEARCH PERIOD DEFINITION TABLE>

| ACTION ID | ACTION TYPE | SEARCH START TIME | SEARCH END TIME |
|-----------|-------------|-------------------|-----------------|
| 001 | ACTION DATA 1 | SST1 | SET1 |
| 002 | ACTION DATA 2 | SST2 | SET2 |
| · · · | · · · | · · · | · · · |
| · · · | · · · | · · · | · · · |

# FIG. 11A

<12671:ACTION EVALUATION LOGIC TABLE>

| ACTION ID | EVALUATION CONDITION / ACTION TYPE | EVALUATION TARGET PROCESS DATA 1 | | | | | | | | | EVALUATION TARGET PROCESS DATA 2 | EVALUATION TARGET PROCESS DATA n |
|---|---|---|---|---|---|---|---|---|---|---|---|---|
| | | EVALUATION DATA NAME | EVALUATION START TIME | EVALUATION END TIME | CHANGE DIRECTION | CHANGE RANGE min | CHANGE RANGE max | DEVIATION DIRECTION | DEVIATION AMOUNT min | DEVIATION AMOUNT max | · · · | · · · |
| 001 | ACTION DATA 1 | EVALUATION DATA 11 | TS11 | TE11 | INCREASE | $\Delta Vmin11$ | $\Delta Vmax11$ | DECREASE | $\sigma min11$ | $\sigma max11$ | · · · | · · · |
| 002 | ACTION DATA 2 | EVALUATION DATA 21 | TS21 | TE21 | · · · | $\Delta Vmin21$ | $\Delta Vmax21$ | · · · | $\sigma min21$ | $\sigma max21$ | · · · | · · · |
| · · · | · · · | · · · | · · · | · · · | · · · | · · · | · · · | · · · | · · · | · · · | · · · | · · · |
| · · · | · · · | · · · | · · · | · · · | · · · | · · · | · · · | · · · | · · · | · · · | · · · | · · · |

EP 2 453 403 A1

FIG. 11B

EP 2 453 403 A1

<12672:ACTION EVALUATION WEIGHTING TABLE>

| ACTION ID | ACTION TYPE | EVALUATION WEIGHTING | | | |
|---|---|---|---|---|---|
| | | EVALUATION TARGET PROCESS DATA 1 | EVALUATION TARGET PROCESS DATA 2 | . . . | EVALUATION TARGET PROCESS DATA n |
| 001 | ACTION DATA 1 | W11 | W12 | . . . | W1n |
| 002 | ACTION DATA 2 | W21 | W22 | . . . | W2n |
| . . . | . . . | . . . | . . . | . . . | . . . |
| . . . | . . . | . . . | . . . | . . . | . . . |

# FIG. 11C

<12673:ACTION OVERALL EVALUATION DETERMINATION TABLE>

| ACTION ID | ACTION TYPE | OVERALL EVALUATION CLASSIFICATION | | |
|---|---|---|---|---|
| | | POOR | STANDARD | GOOD |
| 001 | ACTION DATA 1 | $<K11$ | $K11\leqq,\leqq K12$ | $K12<$ |
| 002 | ACTION DATA 2 | $<K21$ | $K21\leqq,\leqq K22$ | $K22<$ |
| ・・・ | ・・・ | ・・・ | ・・・ | ・・・ |
| ・・・ | ・・・ | ・・・ | ・・・ | ・・・ |

EP 2 453 403 A1

FIG. 12

130

| EVALUATION RESULT | ACTION OCCURRENCE TIME | ACTION TYPE | ACTION VARIATION | OVERALL EVALUATION VALUE |
|---|---|---|---|---|
| GOOD | . . . <br> . . . <br> . . . | . . . <br> . . . <br> . . . | . . . <br> . . . <br> . . . | . . . <br> . . . <br> . . . |
| STANDARD | . . . <br> . . . <br> . . . | . . . <br> . . . <br> . . . | . . . <br> . . . <br> . . . | . . . <br> . . . <br> . . . |
| POOR | . . . <br> . . . <br> . . . | . . . <br> . . . <br> . . . | . . . <br> . . . <br> . . . | . . . <br> . . . <br> . . . |

# FIG. 13

START

ACQUIRE AND STORE
MANUFACTURING CONDITION DATA — S101

ACQUIRE AND STORE
OPERATION PROCESS DATA — S102

SIMILAR OPERATION
SEARCH PROCESS — S103

ACTION DETERMINATION
PROCESS — S104

ACTION PAST OPERATION
SEARCH PROCESS — S105

SIMILAR OPERATION
EVALUATION PROCESS — S106

PAST OPERATION GUIDANCE
INDICATION (DISPLAY) PROCESS — S107

END

**INTERNATIONAL SEARCH REPORT**

| | International application No. |
|---|---|
| | PCT/JP2009/062351 |

A. CLASSIFICATION OF SUBJECT MATTER
*G06Q50/00*(2006.01)i

According to International Patent Classification (IPC) or to both national classification and IPC

B. FIELDS SEARCHED

Minimum documentation searched (classification system followed by classification symbols)
G06Q50/00

| Documentation searched other than minimum documentation to the extent that such documents are included in the fields searched | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2007-94856 A (Yokogawa Electric Corp.), 12 April, 2007 (12.04.07), | 1-6,8-15, 17-20 |
| A | Par. Nos. [0013] to [0019], [0025] to [0034], [0072] to [0073] (Family: none) | 7,16 |
| Y | JP 2008-146322 A (Nippon Steel Corp.), 26 June, 2008 (26.06.08), Claim 1 (Family: none) | 1-6,8-15, 17-20 |
| Y | JP 2005-141292 A (Yamatake Corp.), 02 June, 2005 (02.06.05), Par. Nos. [0034], [0037] (Family: none) | 1-6,8-15, 17-20 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 July, 2009 (22.07.09) | 04 August, 2009 (04.08.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

34

## INTERNATIONAL SEARCH REPORT

| International application No. |
| --- |
| PCT/JP2009/062351 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2006-216589 A  (Omron Corp.),<br>17 August, 2006 (17.08.06),<br>Claims 4, 6; Par. Nos. [0236] to [0240]<br>& CN 1816275 A | 3,6,9,12,15,<br>18 |
| A | JP 2003-108224 A  (Toshiba Corp.),<br>11 April, 2003 (11.04.03),<br>Par. Nos. [0028] to [0030], [0035]<br>(Family: none) | 7,16 |
| A | JP 2000-259243 A  (Ishikawajima-Harima Heavy<br>Industries Co., Ltd.),<br>22 September, 2000 (22.09.00),<br>Par. No. [0046]<br>(Family: none) | 8,17 |

Form PCT/ISA/210 (continuation of second sheet) (April 2007)

**REFERENCES CITED IN THE DESCRIPTION**

**Patent documents cited in the description**

- JP 7216359 A
- JP 2002323923 A
- JP 2005135010 A